# FASCICULE DE BREVET EUROPEEN

(11) **EP 0 750 523 B1**
(45) Date de publication et mention de la délivrance du brevet: **14.02.2001**
(21) Numéro de dépôt: 95913202.8
(22) Date de dépôt: 16.03.1995
(51) Int. Cl.: B01D 17/032, B01D 17/02

(54) **DISPOSITIF D'EXTRACTION D'UNE PHASE SUPERIEURE**
VORRICHTUNG ZUR ENTNAHME EINER OBEREN PHASE
UPPER PHASE REMOVAL DEVICE

(30) Priorité: 16.03.1994 FR 9403306
(43) Date de publication de la demande: 02.01.1997
(73) Titulaire: RHODIA CHIMIE, 92408 Courbevoie Cédex (FR)
(72) Inventeur: BOLOMIER, Denis, F-69630 Chaponost (FR); BAILLOUD, Maurice, F-69230 Saint-Genis-Laval (FR); DUBOST, Pascal, F-01330 Villars-les-Dombes (FR)
(74) Mandataire: Fleurance, Raphael
(86) Numéro de dépôt international: FR9500316
(87) Numéro de publication internationale: WO9524957

(56) Documents cités:
- EP-A- 0 219 164
- WO-A-91/00765
- PATENT ABSTRACTS OF JAPAN vol. 10 no. 49 (C-330) [2106] ,26 Février 1986 & JP,A,60 197210 (TADA KAGAKU KIKI KOGYO) 5 Octobre 1985,

## Description

### DOMAINE TECHNIQUE

La présente invention concerne le domaine technique de la séparation de phases de produits divers et plus particulièrement liquides, intervenant dans tous processus industriels et elle vise, plus particulièrement, l'étape de séparation devant intervenir à partir d'un réservoir ou réacteur fermé contenant un système biphasique avec présence d'interface entre au moins deux produits, composés ou milieux ayant des masses volumiques différentes.

Dans de nombreux procédés industriels, il est nécessaire de séparer une phase par rapport à une autre et à cette fin, une technique consiste à mettre en oeuvre un tube plongeur adapté sur le couvercle ou le dessus du réacteur, de manière à plonger dans le volume interne pour permettre une extraction par aspiration de la phase possédant la plus faible masse volumique.

Cette technique qui permet effectivement de soutirer, d'extraire ou de prélever la phase de masse volumique la plus faible est, au sens général, satisfaisante, mais connaît des limites d'utilisation dans un certain nombre d'applications.

Lorsque le processus de séparation intervient dans un réservoir fermé et non transparent, la difficulté de mise en oeuvre des moyens ci-dessus consiste à pouvoir apprécier de façon relativement précise le plan de séparation des phases, de façon à pouvoir disposer la bouche d'aspiration du tube plongeur juste légèrement au-dessus de ce plan.

Il pourrait être considéré qu'un tel plan peut être apprécié avec une précision suffisante à partir des paramètres de conduite du processus industriel et/ou encore des quantités de produits de base à traiter donnant lieu au système biphasique.

En pratique, il n'en est rien et l'incertitude concernant l'appréciation du plan de séparation des phases en milieu aveugle pose un problème sérieux lorsqu'il convient de prendre en compte le coût du procédé d'obtention ainsi que celui propre au composé devant être extrait.

En effet, l'incertitude peut conduire à laisser subsister par sécurité une proportion importante de la phase à extraire à l'intérieur du réacteur ou encore à extraire une partie de la phase de masse volumique plus forte, ce qui conduit à une pollution des lignes d'extraction, mais aussi de la phase de plus faible masse volumique dont on cherchait à produire et extraire la quantité la plus pure possible.

Ces inconvénients sont encore augmentés lorsque le niveau du plan de séparation des phases connaît des fluctuations difficilement contrôlables et imprévisibles tenant par exemple, soit aux conditions de déroulement d'un procédé en amont du réacteur, soit encore aux variations des paramètres régissant le milieu interne du réacteur, telles que celles de température et de pression.

### ART ANTÉRIEUR

On connait par le document JP-A-60 197 210 un dispositif d'extraction avec une canne de prélèvement dont la position est asservie aux données fournies par un capteur séparé, détectant la position de l'interface entre deux phases non miscibles.

Il peut être considéré que la technique antérieure ne fournit pas à l'heure actuelle de moyens techniques permettant d'assurer avec une sécurité suffisante, l'extraction, au sein d'un réacteur fermé, d'un composé de masse volumique plus faible, par rapport à un milieu de masse volumique plus forte, en fournissant en aveugle une certitude d'extraction maximale du composé de plus faible masse sans aucune extraction du milieu de masse volumique la plus forte.

L'objet de l'invention est de combler le besoin ainsi manifesté en proposant un nouveau procédé d'extraction faisant intervenir la prise en compte, dans un volume aveugle, du plan du niveau de séparation entre au moins deux phases dont seule la supérieure doit être extraite du réacteur fermé.

### EXPOSÉ DE L'INVENTION

Pour atteindre l'objectif ci-dessus, l'invention propose un dispositif tel que défini dans les revendications.

Diverses autres caractéristiques ressortent de la description faite ci-dessous en référence aux dessins annexés qui montrent, à titre d'exemples non limitatifs, des formes de réalisation de l'objet de l'invention.

### BRÈVE DESCRIPTION DES DESSINS

La figure **1** est une vue schématique d'un réacteur équipé des moyens de mise en oeuvre de l'objet de l'invention.

La figure **2** est une coupe transversale, vue de face, montrant, à plus grande échelle, des détails de réalisation des moyens de l'invention.

La figure **3** est une vue latérale prise selon la ligne **III-III** de la figure **2**.

### MEILLEURE MANIÈRE D'EXÉCUTER L'INVENTION

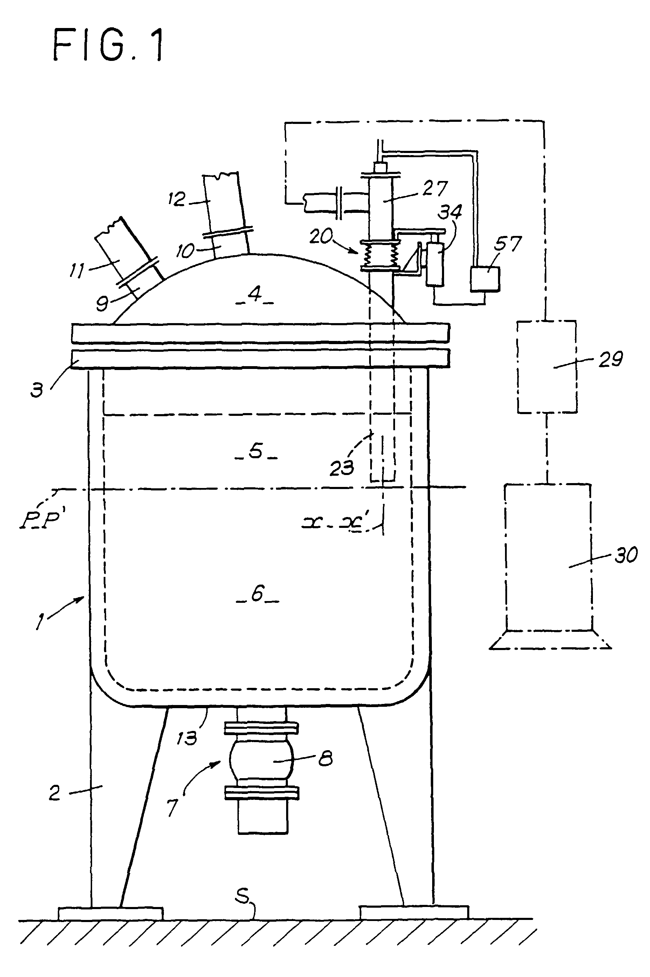

La figure **1** montre de façon schématique un réacteur **1** constitué par un réservoir de toute forme appropriée, fixé par rapport au sol **S**, porté éventuellement par un piètement **2** ou tout autre moyen et dont le bord supérieur **3** est adapté pour permettre le montage et la fixation étanche d'un dessus, couvercle ou dôme **4** destiné à isoler le milieu interne du récipient **1** dans lequel, par tout processus approprié, doit s'établir un système biphasique composé d'une phase **5** de plus faible masse volumique et d'une phase **6** de masse volumique plus forte.

Au sens de l'invention, le procédé de séparation est indifférent et peut résulter d'un processus industriel en amont ou encore d'une étape de traitement particulière au sein du réacteur **1**, notamment lorsque ce dernier est équipé d'un dispositif d'agitation non représenté et/ou encore de sources de chauffage ou de refroidissement appropriées, également non visibles à la figure **1**.

A titre d'exemple, il peut être considéré que le réacteur **1** comporte, à sa base, un puits **7** de soutirage constitué par une tubulure équipée d'une vanne **8** et, sur le dessus **4**, des tubulures **9** et **10** prévues par exemple pour le raccordement de conduites ou canalisations **11** et **12** destinées à mettre le réacteur **1** en relation avec une installation en amont et/ou en aval ou encore avec des nourrices ou réservoirs-tampons de distribution de produits devant être mélangés dans le réacteur **1**.

Les moyens de l'invention pour assurer l'extraction de la phase **5**, après une étape de séparation et de stabilisation relativement au milieu **6**, sont destinés à prendre en compte, en aveugle à l'intérieur du récipient fermé **1**, la hauteur, par rapport à une référence pouvant être le sol **S** ou le fond **13** du récipient, du plan **P-P'** passant par le niveau ou l'interface de séparation entre les phases **5** et **6**.

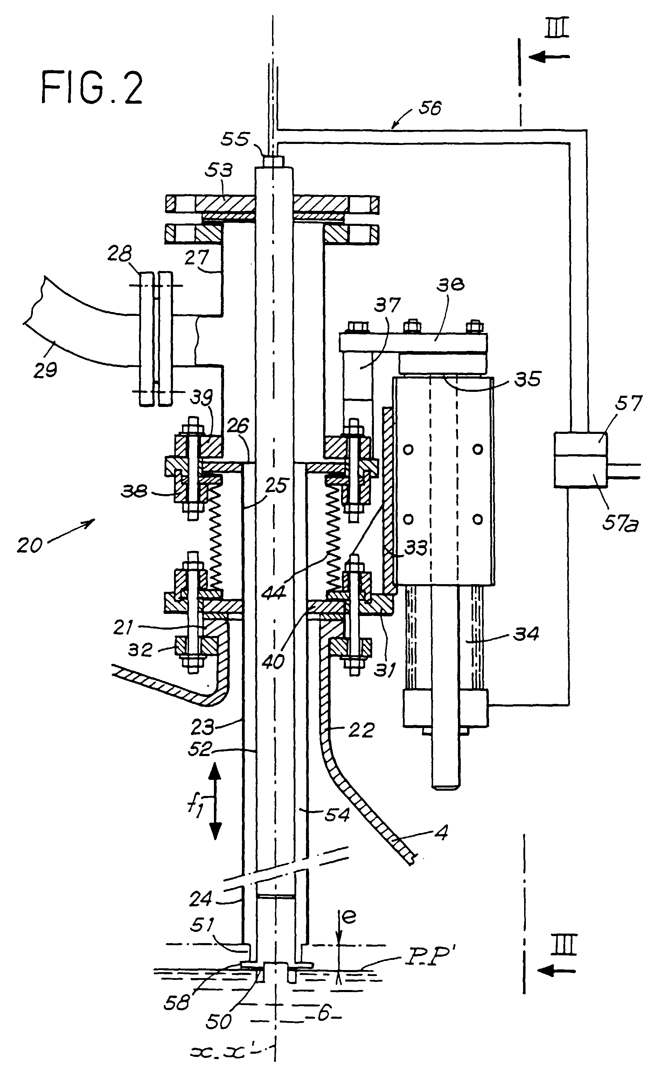

Les moyens selon l'invention comprennent, selon les figures 1 et 2, une tête d'extraction **20** qui est montée sur une collerette **21** formée par une tubulure **22** appartenant au dessus **4** du réacteur **1**. Généralement, et de façon préférée, l'axe de la tubulure **22** est vertical et le plan de la collerette **21** est orthogonal à cet axe.

La tête **20** comprend un tube plongeur **23** dont la partie terminale inférieure **24** plonge dans le réacteur **1**, alors que la partie terminale supérieure **25** est pourvue d'un collet **26** servant de base à la fixation étanche d'un raccord en T **27**. D'une manière connue, le raccord **27** comporte une bride **28** sur laquelle est raccordée la ligne d'un groupe d'aspiration **29** à même d'assurer le remplissage d'un réservoir de stockage amovible **30**.

Selon l'invention, il est prévu d'interposer entre le dessus **4** et la tête **20**, des moyens de guidage et de motorisation du tube **23** par rapport au réacteur, selon une course rectiligne alternative dirigée parallèlement à l'axe **x-x'** du tube. Ces moyens de guidage et de motorisation comprennent, par exemple, pour assumer la fonction de motorisation, une embase **31** qui est fixée, par l'intermédiaire d'une bride **32**, sur la collerette **21** avec interposition de moyens d'étanchéité adaptés à la nature des produits entrant dans la composition du système biphasique occupant le volume du réacteur **1**. L'embase **31** est destinée à être traversée par le tube **23** et comporte extérieurement à ce dernier une console **33** réservée au montage d'un transformateur d'énergie **34**, par exemple un vérin à course rectiligne alternative parallèle à l'axe **x-x'**. Le vérin **34** peut être un vérin à simple ou double effet, hydraulique ou pneumatique ou encore un vérin mécanique ou électrique.

L'organe mobile **35** du vérin **34** est lié à une platine de reprise **36** qui est solidaire de colonnettes **37** portées ou fixées sur le collet **26**. Les colonnettes **37** sont solidaires d'une semelle **38** qui est liée au collet **26** par l'intermédiaire d'une bride **39** assurant également la solidarisation sur le collet **26** du raccord **27**.

Le fonctionnement du transformateur d'énergie **34** permet, par les moyens décrits ci-dessus, de soumettre le tube plongeur **23** à un déplacement rectiligne alternatif selon l'un ou l'autre des sens de la flèche **f**_{**1**}.

Les moyens destinés à assurer le guidage du tube plongeur **23** en déplacement rectiligne alternatif parallèlement à l'axe **x-x'**, comprennent, par exemple, en outre une bague **40** qui est fixée sur la collerette **21** par la bride **32**. La bague **40** est réalisée pour établir un centrage et un guidage du tube plongeur **23** la traversant.

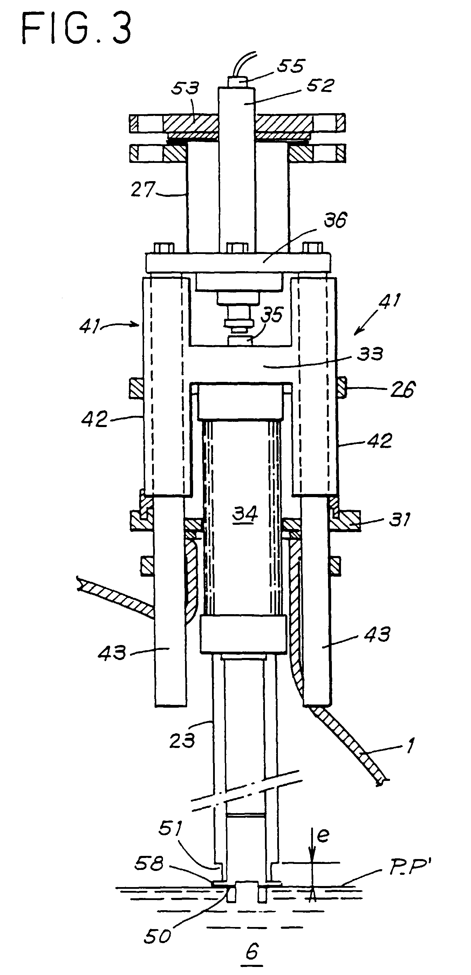

Les moyens de guidage comprennent, par exemple, par ailleurs, deux coulisses **41** ( fig. 3) comportant chacune une glissière **42** qui est formée, parallèlement à l'axe **x-x'**, par la console **33**. Chaque glissière **42** est destinée à coopérer en permanence avec une colonne de guidage **43** s'étendant verticalement à partir de la platine de reprise **36**.

Un soufflet protecteur **44** est disposé pour entourer concentriquement le tube plongeur **23** en étant fixé par ses extrémités respectivement sur les brides **32** et **39**. Un tel soufflet peut être réalisé en de nombreuses matières différentes et par exemple en polytétrafluoroéthylène. Le soufflet **44** assure l'étanchéité de la tête d'extraction **20** mais des moyens techniques équivalents peuvent être substitués.

Le tube **23** est équipé d'un capteur ou d'un détecteur de niveau **50** qui est disposé juste en dessous du plan de la bouche **51** d'aspiration du tube **23**. Le capteur ou détecteur **50** est choisi pour être à même de détecter le plan **P-P'** de séparation des phases **5** et **6** et à cette fin, plusieurs solutions techniques peuvent être retenues. Il est possible de mettre en oeuvre, en tant que capteur ou détecteur, un conductivimètre, un densimètre, un viscosimètre ou encore un détecteur optique. De tels capteurs ou détecteurs font partie de la technique connue en étant proposés à la commercialisation par de nombreuses entreprises et ne font donc pas partie directement de l'objet de l'invention.

Le capteur ou le détecteur **50** est à une distance **e** de la bouche **51**. Selon une forme de réalisation, le capteur ou le détecteur **50** est disposé à l'extrémité d'une canne **52** s'étendant à l'intérieur et concentriquement au tube **23**, en étant suspendue au raccord **27** par l'intermédiaire d'un plateau **53**. La canne **52** présente un diamètre choisi pour laisser subsister à l'intérieur du tube **23** un espace annulaire **54** qui est compatible avec la viscosité de la phase **5** et les conditions d'aspiration entretenues par le groupe **29**.

La canne **52** comporte à l'extérieur du plateau **53** un connecteur **55** raccordé par une ligne **56** à un moyen d'information **57** qui peut être, dans un exemple d'application simple, un témoin quelconque permettant d'apprécier le fonctionnement du capteur ou du détecteur **50**.

Par ailleurs, le capteur **50** est, selon l'invention, disposé sous une plaque **58** qui est placée dans le plan inférieur de la bouche **51**.

Les moyens décrits ci-dessus sont mis en oeuvre pour procéder à l'extraction de la phase de plus faible masse volumique en procédant de la manière suivante.

Après stabilisation du plan de séparation **P-P'**, le tube plongeur **23** est déplacé dans le sens descendant par l'intermédiaire du transformateur **34** jusqu'au moment où le capteur ou le détecteur **50** rencontre le plan **P-P'** et entre en état de détection du niveau supérieur de la phase **6**.

Dans cet état, l'information transmise à partir du capteur ou détecteur **50** par la ligne **56** assure le fonctionnement des moyens **57** informant l'opérateur de la détection du niveau **P-P'**.

L'information transmise à partir du capteur **50**, peut avantageusement être mise à profit pour asservir un bloc **57a** chargé de piloter les moyens de commande ou d'alimentation du transformateur d'énergie **34**.

L'arrêt de fonctionnement du transformateur **34** maintient le tube plongeur dans une condition stable d'enfoncement dans lequel, tel que cela ressort de la figure **2**, le capteur **50** se trouve placé sensiblement dans le plan **P-P'** alors que la bouche d'aspiration du tube **23** est située dans un plan supérieur distant d'une mesure **e** par rapport au plan **P-P'**.

L'extraction de la phase **5** peut alors être engagée en commandant le fonctionnement du groupe **29** jusqu'au moment où la quantité résiduelle de phase **5** atteint une hauteur par rapport au plan **P-P'** qui est inférieure au niveau d'écartement **e**.

Dans une telle situation, les moyens **29** subissent une phase de désamorçage informant l'opérateur que la quantité maximale de phase **5** a été extraite.

Selon les conditions d'extraction et de stabilité régnant à l'intérieur du réacteur **1**, l'intervalle **e** peut être réduit à une épaisseur de couche relativement faible procurant ainsi la garantie d'extraire la quantité optimale possible et disponible du compose **5** à partir du réacteur fermé 1.

Il est ainsi garanti une perte minimale de composé **5** ainsi qu'une absence de risque de pollution de la ligne d'extraction d'une fraction du milieu **6**.

Cette garantie est fournie par la plaque **58** empêchant que la couche supérieure de la phase **6** n'atteigne le plan inférieur de la bouche **51**.

Selon une disposition de l'invention, il peut être envisagé d'adapter en bout de la canne **52**, un capteur **50** susceptible de détecter l'interface, soit à la descente, soit à la remontée du tube plongeur **23**.

Dans un tel cas, le signal fourni par le capteur **50** est de même nature mais de sens différent selon le niveau haut ou bas de détection et permet alors de piloter, soit à la descente, soit à la montée, le déplacement du tube plongeur **23** par l'intermédiaire du bloc **57a** pour asservir toujours la position de la bouche **51** dans un état d'écartement **e** par rapport au plan **P-P'**, quelle que soit la variation de ce dernier, par exemple en fonction des conditions de déroulement d'un processus industriel amont, fournissant dans le réacteur un système biphasique composé des phases **5** et **6**.

### APPLICATION INDUSTRIELLE

L'invention a également pour objet l'utilisation du dispositif tel que défini ci-dessus, pour l'extraction, au sein d'un réacteur fermé contenant un système biphasique, de la phase de plus faible masse volumique.

A titre d'application industrielle, les moyens de l'invention peuvent être mis en oeuvre pour la récupération du toluène à partir d'un mélange Toluène/Chloroéthanol, par lavage du toluène à l'eau pour extraire le Chloroéthanol. Dans une telle application, la couche aqueuse : eau/Chloroéthanol constitue la phase **5** et la couche organique : toluène la phase **6** et le procédé mis en oeuvre par séparation successive consiste à récupérer la phase **6**.

Ainsi, l'utilisation du dispositif peut être caractérisée en ce que le système biphasique est constitué de toluène/chloroéthanol + eau, la couche aqueuse chloroéthanol + eau constituant la phase de plus faible masse volumique.

## Revendications

1. Dispositif d'extraction au sein d'un réacteur fermé de la phase **(5)** de plus faible masse volumique à partir d'un système biphasique, du type comprenant une tête d'aspiration **(20)** adaptée sur le dessus du réacteur et reliée à des moyens d'aspiration, un tube plongeur **(23)** lié aux moyens d'aspiration, descendant dans le réacteur par l'intermédiaire de moyens de guidage et de motorisation en course rectiligne alternative parallèlement à l'axe **(x-x')** dudit tube qui présente, à son extrémité basse, une bouche d'aspiration **(51)** et un détecteur **(50)** d'interface de phases pilotant le moyen d'entraînement du tube plongeur,
caractérisé en ce que :
- le détecteur **(50)** est disposé en dessous d'une plaque **(58)** placée dans le plan inférieur de la bouche d'aspiration du tube plongeur pour détecter le plan d'interface entre la phase de plus grande masse volumique et la phase de plus faible masse volumique,
la plaque **(58)** empêchant que la couche supérieure du produit de plus grande masse volumique n'atteigne la bouche d'aspiration.

2. Dispositif selon la revendication 1, caractérisé en ce que le détecteur **(50)** est monté en bout d'une canne **(52)** disposée concentriquement à l'intérieur du tube plongeur en ménageant avec ce dernier un espace annulaire d'aspiration de la phase de plus faible masse volumique.

3. Dispositif selon la revendication 1 ou 2, caractérisé en ce que le capteur **(50)** est lié au tube plongeur et se trouve relié à des moyens d'information **(57)** situés à l'extérieur du réacteur.

4. Dispositif d'extraction selon la revendication 1, caractérisé en ce que
- les moyens de guidage comprennent :
. une bague **(40)** de centrage montée sur le réacteur et traversée par le tube **(23)**,
. des coulisses de guidage **(41)** dont les éléments sont interposés entre le réacteur **(1)** et le tube **(23)**,
- et les moyens de motorisation comprennent un transformateur d'énergie **(34)** interposé entre les éléments des coulisses **(41)**.

5. Dispositif d'extraction selon la revendication 4, caractérisé en ce que les moyens de guidage comprennent
- une embase **(31)** montée sur le réacteur, supportant la bague **(40)** et portant une console **(33)** sur laquelle sont adaptés les éléments fixes **(42)** des coulisses **(41)** et le transformateur d'énergie **(34)**,
- une platine **(36)** de reprise montée sur le tube **(23)**, portant les éléments mobiles **(43)** des coulisses **(41)** et liée à l'organe mobile **(35)** du transformateur d'énergie **(34)**.

6. Dispositif d'extraction selon la revendication 5, caractérisé en ce que la platine **(36)** est portée par un collet **(26)** supérieur du tube **(23)** sur lequel est adapté un raccord **(27)** d'aspiration auquel est suspendue la canne **(52)** disposée concentriquement à l'intérieur du tube et pourvue en bout du capteur.

7. Dispositif d'extraction selon la revendication 6, caractérisé en ce que le collet supporte un soufflet d'étanchéité **(44)** dont la base est liée à l'embase.

8. Dispositif d'extraction selon la revendication 3, caractérisé en ce que le moyen d'information **(57)** comprend un bloc **(57a)** piloté par le capteur et asservissant la commande des moyens de motorisation.

9. Utilisation du dispositif selon l'une des revendications 1 à 8, pour l'extraction, au sein d'un réacteur fermé contenant un système biphasique, de la phase de plus faible masse volumique.

10. Utilisation selon la revendication 9, caractérisée en ce que le système biphasique est constitué de toluène/chloroéthanol+eau, la couche aqueuse chloroéthanol+eau constituant la phase de plus faible masse volumique.

## Patentansprüche

1. Vorrichtung zur Entnahme der Phase (5) geringerer Dichte eines Zweiphasensystems aus einem geschlossenen Reaktor, von der Art, die einen Saugkopf (20) aufweist, der an der Oberseite des Reaktors angepaßt und an Saugeinrichtungen angeschlossen ist, wobei ein mit den Saugeinrichtungen verbundenes Tauchrohr (23) über Führungs- und Motorisierungseinrichtungen in geradliniger Auf- und Abbewegung parallel zur Achse (x-x') des Rohres in den Reaktor eintaucht, das an seinem unteren Ende eine Saugöffnung (51) und einen Detektor (50) zur Erfassung von Phasengrenzflächen besitzt, der die Antriebseinrichtung des Tauchrohrs steuert,
dadurch gekennzeichnet, daß
der Detektor (50) unter einer Platte (58) angeordnet ist, die sich in der unteren Ebene der Ansaugöffnung des Tauchrohrs befindet, um die Grenzflächenebene zwischen der Phase größerer Dichte und der Phase geringerer Dichte zu erfassen, wobei die Platte (58) verhindert, daß die obere Schicht des Produkts größerer Dichte die Saugöffnung erreicht.

2. Vorrichtung nach Anspruch 1, dadurch gekennzeichnet, daß der Detektor (50) am Ende eines Stabs (52) angebracht ist, der konzentrisch im Inneren des Tauchrohrs angeordnet ist und mit diesem letzteren einen ringförmigen Saugraum für die Phase geringerer Dichte bildet.

3. Vorrichtung nach Anspruch 1 oder 2, dadurch gekennzeichnet, daß der Meßfühler (50) mit dem Tauchrohr verbunden und an Informationseinrichtungen (57) angeschlossen ist, die sich außerhalb des Reaktors befinden.

4. Entnahmevorrichtung nach Anspruch 1, dadurch gekennzeichnet, daß
- die Führungseinrichtungen aufweisen:
. einen Zentrierring (40), der auf dem Reaktor angebracht ist und vom Rohr (23) durchquert wird,
. Führungskulissen (41), deren Elemente zwischen den Reaktor (1) und das Rohr (23) eingefügt sind,
- und daß die Motorisierungseinrichtungen einen Leistungstransformator (34) aufweisen, der zwischen die Elemente der Kulissen (41) eingefügt ist.

5. Entnahmevorrichtung nach Anspruch 4, dadurch gekennzeichnet, daß die Führungseinrichtungen aufweisen:
- eine auf den Reaktor montierte Grundplatte (31), die den Ring (40) stützt und eine Konsole (33) trägt, an die die ortsfesten Elemente (42) der Kulissen (41) und der Leistungstransformator (34) angepaßt sind,
- eine Wiederaufnahme-Platine (platine de reprise) (36), die am Rohr (23) angebracht ist, die beweglichen Elemente (43) der Kulissen (41) trägt und mit dem beweglichen Glied (35) des Leistungstransformators (34) verbunden ist.

6. Entnahmevorrichtung nach Anspruch 5, dadurch gekennzeichnet, daß die Platine (36) von einem oberen Bundring (26) des Rohrs (23) getragen wird, an den eine Saugkupplung (27) angepaßt ist, an der der Stab (52) aufgehängt ist, der konzentrisch im Inneren des Rohrs angeordnet und am Ende mit dem Meßfühler versehen ist.

7. Entnahmevorrichtung nach Anspruch 6, dadurch gekennzeichnet, daß der Bundring einen Dichtungsbalg (44) stützt, dessen Basis mit der Grundplatte verbunden ist.

8. Entnahmevorrichtung nach Anspruch 3, dadurch gekennzeichnet, daß die Informationseinrichtung (57) einen Block (57a) aufweist, der vom Meßfühler gesteuert wird und die Steuerung der Motorisierungseinrichtungen regelt.

9. Verwendung der Vorrichtung nach einem der Ansprüche 1 bis 8 zur Entnahme der Phase mit geringerer Dichte aus einem ein Zweiphasensystem enthaltenden, geschlossenen Reaktor.

10. Verwendung nach Anspruch 9, dadurch gekennzeichnet, daß das Zweiphasensystem aus Toluol/Chlorethanol+Wasser besteht, wobei die wässrige Schicht Chlorethanol+Wasser die Phase mit geringerer Dichte bildet.

## Claims

1. Device for extracting, within a closed reactor, the phase (5) with the lowest density from a two-phase system, of the type comprising a suction head (20) fitted on the top of the reactor and connected to suction means, a plunger tube (23) connected to the suction means, descending into the reactor by means of guidance and drive means in alternating rectilinear travel parallel to the axis (x-x') of said tube, which provides, at its bottom end, a suction opening (51) and a phase interface detector (50) controlling the means of driving the plunger tube,
characterised in that:
- the detector (50) is disposed below a plate (58) placed in the bottom plane of the suction opening of the plunger tube in order to detect the interface surface between the phase with the highest density and the phase with the lowest density,
the plate (58) preventing the top layer of the product with the highest density from reaching the suction opening.

2. Device according to Claim 1, characterised in that the detector (50) is mounted at the end of a pipe (52) disposed concentrically with the inside of the plunger tube, forming with the latter an annular space for suction of the phase with the lowest density.

3. Device according to Claim 1 or 2, characterised in that the sensor (50) is connected to the plunger tube and is connected to information means (57) situated outside the reactor.

4. Extraction device according to Claim 1, characterised in that
- the guidance means comprise:
. a centring ring (40) mounted on the reactor, with the tube (23) passing through it,
. guidance slides (41) whose members are interposed between the reactor (1) and the tube (23),
- and the drive means comprise an energy transformer (34) interposed between the members of the slides (41).

5. Extraction device according to Claim 4, characterised in that the guidance means comprise
- a seating (31) mounted on the reactor, supporting the ring (40) and carrying a bracket (33) on which the fixed components (42) of the slides (41) and the energy transformer (34) are fitted,
- a pick-up plate (36) mounted on the tube (23), carrying the moving components (43) of the slides (41) and connected to the moving member (35) of the energy transformer (34).

6. Extraction device according to Claim 5, characterised in that the plate (36) is carried by an upper collar (26) on the tube (23) on which a suction coupling (27) is fitted, from which there is suspended the pipe (52) disposed concentrically with the inside of the tube and provided at the end with the sensor.

7. Extraction device according to Claim 6, characterised in that the collar supports a sealing bellows (44) whose base is connected to the seating.

8. Extraction device according to Claim 3, characterised in that the information means (57) comprises a unit (57a) controlled by the sensor and slaving the control of the drive means.

9. Use of the device according to one of Claims 1 to 8, for extracting, within a closed reactor containing a two-phase system, the phase with the lowest density.

10. Use according to Claim 9, characterised in that the two-phase system consists of toluene/chloroethanol+water, the chloroethanol+water aqueous layer constituting the phase with the lowest density.
